# FASCICULE DE BREVET EUROPEEN

(11) **EP 2 100 309 B1**
(45) Date de publication et mention de la délivrance du brevet: **06.04.2011**
(21) Numéro de dépôt: 07847556.3
(22) Date de dépôt: 30.11.2007
(51) Int. Cl.: G21C 19/32, G21F 7/005

(54) **DISPOSITIF DE TRANSFERT D'ETUIS DE COMBUSTIBLE NUCLEAIRE ENTRE UN EMBALLAGE DE TRANSPORT ET UN DISPOSITIF D'ENTREPOSAGE**
EINRICHTUNG ZUM TRANSFER VON KERNBRENNSTOFFKASSETTEN ZWISCHEN EINEM TRANSPORTBEHÄLTER UND EINER LAGEREINRICHTUNG
DEVICE FOR TRANSFERRING NUCLEAR FUEL CARTRIDGES BETWEEN A TRANSPORT CONTAINER AND A STORAGE DEVICE

(30) Priorité: 04.12.2006 FR 0655295
(43) Date de publication de la demande: 16.09.2009
(73) Titulaire: Commissariat à l'Énergie Atomique et aux Énergies Alternatives, 75015 Paris (FR)
(72) Inventeur: ARGOUD, Jean-Claude, 38330 Montbonnot (FR)
(74) Mandataire: Ilgart, Jean-Christophe
(86) Numéro de dépôt international: PCT/EP2007/063040
(87) Numéro de publication internationale: WO 2008/068190

(56) Documents cités:
- DE-C1- 3 717 189
- FR-A- 1 395 783
- GB-A- 2 336 409
- US-A- 4 780 269
- DATABASE WPI Week 200309 Derwent Publications Ltd., London, GB; AN 2003-101457 XP002443310 -& RU 2 192 677 C1 (ATOMMASH STOCK CO) 10 novembre 2002 (2002-11-10)

## Description

La présente invention se rapporte à un dispositif pour transférer du combustible nucléaire entre un emballage de transport et un dispositif d'entreposage, et en particulier un étui chargé de combustible nucléaire usé.

Dans le cadre de la gestion des combustibles irradiés, après leur utilisation en réacteur, ceux-ci sont entreposés dans une piscine pour leur refroidissement avant leur évacuation vers un dispositif d'entreposage en attente d'un exutoire définitif, qui peut être le retraitement ou le stockage à long terme.

Le combustible irradié qui peut être sous forme de crayon est stocké dans des étuis étanches formant une première barrière biologique.

Ces étuis sont alors destinés à être transportés dans un emballage de transport jusqu'à un lieu de stockage comportant un logement d'entreposage permettant le refroidissement du combustible.

Un tel transfert d'un étui de l'emballage de transport vers le dispositif d'entreposage ou inversement du dispositif d'entreposage vers l'emballage de transport est connu du document US 4 780 269. Or dans ce document, aucune barrière biologique n'est prévue entre l'emballage et le dispositif d'entreposage afin de protéger l'environnement extérieur des radiations, notamment le personnel effectuant ce transfert. En effet, il est préférable de prévoir une protection biologique en plus de celle formée par l'étui afin d'assurer une sécurité maximale du personnel.

Il est également connu des documents FR1 395 783 et GB 2 336 409 un dispositif de liaison étanche entre des enceintes blindées, cependant ces documents ne décrivent pas comment les couvercles des enceintes peuvent être retirés et isolés de l'environnement extérieur.

C'est par conséquent un but de la présente invention d'offrir un dispositif de transfert d'un étui de combustible nucléaire entre un emballage de transport et un dispositif d'entreposage formant une barrière biologique continue entre le combustible nucléaire et l'environnement extérieur.

### EXPOSÉ DE L'INVENTION

Le but précédemment énoncé est atteint par un dispositif comportant un corps dans lequel est monté mobile un tiroir multifonctionnel apte à assurer les fonctions de retrait des bouchons de l'emballage de transport d'une part, et du dispositif d'entreposage d'autre part, et de transfert de l'étui entre l'emballage de transport et le dispositif d'entreposage.

En d'autres termes, le dispositif de transfert forme une vanne tiroir de grande taille, au moins un étage du tiroir permettant d'ouvrir l'emballage de transport et le dispositif d'entreposage, et un autre étage du tiroir permettant le transfert effectif de l'étui de l'emballage de transport au dispositif de transfert et vice-versa.

Ainsi, l'environnement extérieur n'est jamais en contact ni avec l'étui, ni avec l'intérieur du dispositif d'entreposage, ni avec celui de l'emballage de transport, le dispositif de transfert assurant le confinement et limitant la fuite des contaminations.

Le dispositif de transfert forme en lui-même une protection biologique. Celui-ci comporte par ailleurs des dispositifs d'étanchéité permettant de réaliser ses opérations de chargement et de déchargement des dispositifs de stockage sans rupture de confinement.

Le dispositif selon l'invention permet par ailleurs l'ouverture d'un emballage de transport et du dispositif d'entreposage sans rupture de confinement, sans nécessité de protection biologique supplémentaire et sans intervention humaine directe.

Le dispositif de transfert selon la présente invention permet de manière particulièrement avantageuse de réaliser un chargement ou un déchargement à l'air libre ; il n'est pas nécessaire de prévoir de réaliser ces manipulations dans un endroit clos, le dispositif de transfert assurant en combinaison avec l'emballage de transport et le dispositif d'entreposage le confinement nécessaire et suffisant de l'étui.

Par ailleurs, ce dispositif de transfert présente l'avantage d'être portatif et donc d'être utilisé pour le chargement de tous les logements d'une station de stockage. Ceci réduit en outre le coût du stockage.

La présente invention a alors principalement pour objet un dispositif de transfert d'un étui de combustible nucléaire entre un emballage de transport dudit étui et un dispositif d'entreposage dudit étui, ledit emballage comportant une cavité cylindrique de réception de l'étui et une ouverture obturée par une tape de transport pour le chargement/déchargement de l'étui, ledit dispositif d'entreposage comportant au moins un logement pour recevoir ledit étui et une ouverture obturée par une tape de stockage pour le chargement/déchargement dudit étui, lequel dispositif de transfert comportant un corps et un tiroir d'axe longitudinal, apte à coulisser dans ledit corps selon son axe longitudinal, ledit tiroir comportant au moins un premier compartiment pour retirer une tape de l'emballage de transport et une tape du dispositif d'entreposage et un deuxième compartiment pour permettre le passage de l'étui de l'emballage de transport au dispositif d'entreposage et inversement, et des moyens pour rendre étanche le transfert entre l'emballage de transport et le dispositif de transfert et entre le dispositif de transfert et le dispositif d'entreposage.

Dans un exemple particulièrement avantageux, le dispositif de transfert selon l'invention comporte également un compartiment intermédiaire entre le premier et le deuxième compartiment, comportant un passage dans lequel sont montés des moyens de retrait d'un bouchon de protection biologique contenu dans le dispositif d'entreposage en arrière de la tape, ledit bouchon étant stocké dans ledit passage.

Le premier compartiment peut comporter un passage axial dans lequel sont montés des premiers moyens de retrait de la tape de l'emballage de transport et des deuxièmes moyens de retrait de la tape du dispositif d'entreposage, lesdits moyens de retrait étant du type à baïonnette ou à pince, montés à coulissement dans ledit passage, lesdites tapes étant stockées dans ledit passage lors du retrait.

Dans un exemple de réalisation, les premiers moyens de retrait et les deuxièmes moyens de retrait sont montés tête-bêche, et sont montés dans deux chambres isolées l'une de l'autre. Ce qui permet de réaliser un tiroir compact et évite un transfert de contamination entre les tapes.

Le deuxième compartiment peut comporter un passage de diamètre supérieur à celui d'un étui pour permettre le transfert d'un étui entre l'emballage de transport et le dispositif d'entreposage par ledit passage, ledit diamètre étant sensiblement égal à celui de la cavité de l'emballage de transport et à celui du logement du dispositif d'entreposage, ceci permettant de limiter les chocs sur l'étui lors de son transfert.

Le corps du dispositif de transfert peut comporter une enveloppe définissant un espace intérieur étanche dans lequel le tiroir peut coulisser, ladite enveloppe comportant des flasques latéraux munis chacun d'une ouverture destinée à être en regard de la cavité de l'emballage de transport et une ouverture destinée à être en regard du logement du dispositif d'entreposage, et lesdits moyens pour rendre étanche le transfert comportant deux joints gonflables solidaires des flasques latéraux entourant de manière continue chacune des ouvertures, et destinés à venir chacun en contact avec une face d'extrémité de l'emballage de transport et avec une face d'extrémité du dispositif d'entreposage respectivement.

Les flasques latéraux comportent avantageusement des panneaux amovibles permettant la maintenance, lesdits panneaux étant montés de manière étanche afin d'assurer l'étanchéité de l'enveloppe.

Par exemple, le tiroir est déplacé au moyen d'un moteur électrique.

Les moyens de retrait sont par exemple actionnés par air comprimé, ce qui permet d'éviter les pollutions par de l'huile.

La présente invention a également pour objet un procédé de transfert d'un étui de combustible nucléaire entre un emballage de transport et un dispositif d'entreposage au moyen d'un dispositif de transfert comportant un tiroir muni d'au moins un premier compartiment pour le retrait de tapes de l'emballage de transport et du dispositif d'entreposage, d'un deuxième compartiment pour le passage de l'étui et des moyens d'étanchéité entre le dispositif de transfert et l'emballage de transport et le dispositif d'entreposage, ledit procédé comportant les étapes :
a) d'alignement du dispositif de transfert avec l'emballage de transport et le dispositif d'entreposage,
b) d'alignement du premier compartiment du tiroir avec là cavité de l'emballage de transport et un logement du dispositif d'entreposage par déplacement du tiroir,
c) de retrait de la tape de transport et de la tape de stockage,
d) d'alignement du deuxième compartiment avec la cavité de l'emballage de transport et ledit logement du dispositif d'entreposage par déplacement du tiroir,
e) de coulissement de l'étui entre le dispositif d'entreposage et l'emballage de transport.

Avantageusement, le procédé selon l'invention comporte une étape c') d'alignement d'un compartiment intermédiaire avec la cavité de l'emballage de transport et ledit logement du dispositif d'entreposage par déplacement du tiroir, et une étape c'') de retrait d'un bouchon contenu dans ledit logement en retrait de la tape de stockage.

Le procédé peut également comporter une étape de gonflage de joints portés par le dispositif et en contact avec l'emballage de transport et le dispositif d'entreposage pour assurer un contact étanche entre le dispositif de transfert et l'emballage de transport et le dispositif d'entreposage.

Lors de l'étape a), il peut également être prévu un accrochage du dispositif de transfert sur le dispositif d'entreposage et sur l'emballage de transport.

### BRÈVE DESCRIPTION DES DESSINS

La présente invention sera mieux comprise à l'aide de la description qui va suivre et des dessins annexés, sur lesquels :
- la figure 1 est une vue en coupe longitudinale d'un dispositif de transfert selon la présente invention dans une première position,
- la figure 2 est une vue du dispositif de transfert de la figure 1 dans une deuxième position,

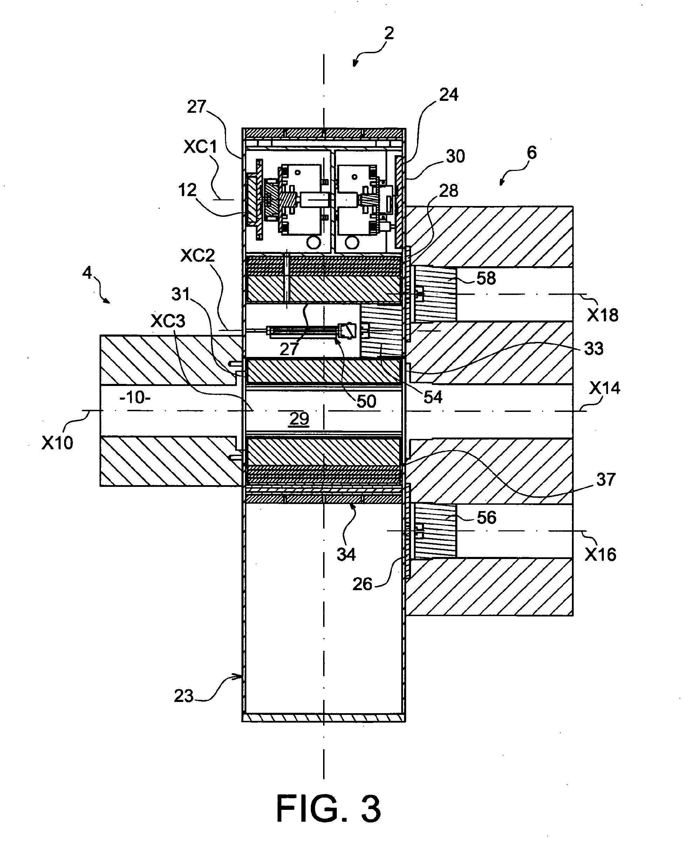

- la figure 3 est une vue du dispositif de transfert de la figure 1 dans une troisième position.

### EXPOSÉ DÉTAILLÉ DE MODES DE RÉALISATION PARTICULIERS

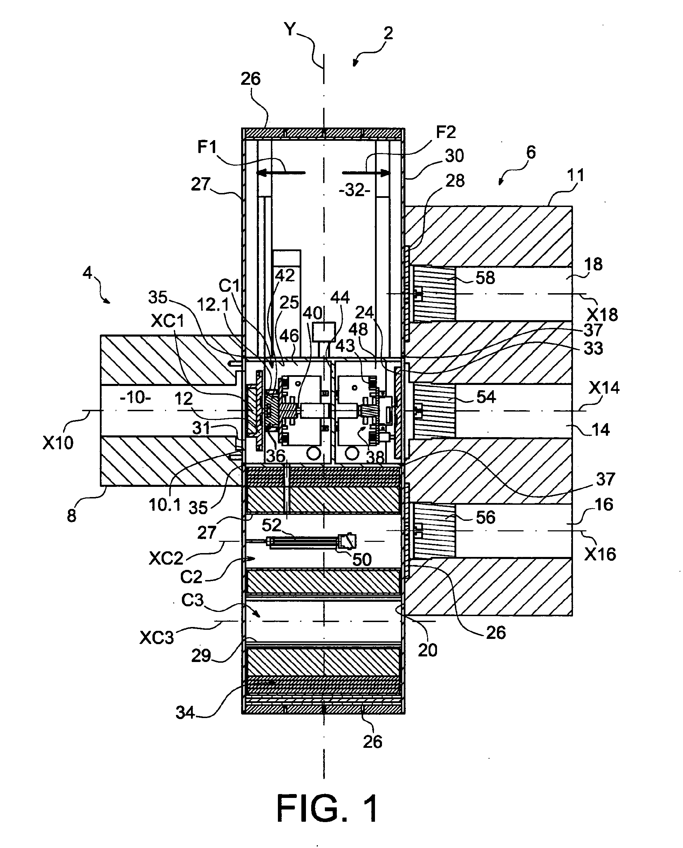

Sur la figure 1, on peut voir un exemple de réalisation d'un dispositif de transfert 2 selon la présente invention dans un état d'ouverture de l'emballage de transport.

Le dispositif de transfert selon la présente invention est destiné à être interposé entre un emballage de transport 4 et un dispositif d'entreposage 6.

L'emballage de transport 4 comporte un corps 8 muni d'une cavité cylindrique 10 pour recevoir un étui d'axe X10. La cavité cylindrique 10 débouche de part et d'autre du corps cylindrique par une première extrémité (non représentée) et une deuxième 10.1 extrémité longitudinale. La deuxième extrémité 10.1 est obturée par une tape 12 amovible, ainsi que la première extrémité (non représentée).

Le dispositif d'entreposage 6 comporte un corps 11, dans lequel sont réalisés des logements cylindriques 14, 16, 18 d'axe X14, X16, X16 parallèles entre eux. Chaque logement 14, 16, 18 débouche sur une face avant 20 du dispositif d'entreposage 6 et est obturé par une tape 24, 26, 28 respectivement. Le dispositif d'entreposage avec trois logements est donné à titre d'exemple, celui-ci peut comporter plus ou moins de trois logements, qui peuvent être répartis verticalement et/ou horizontalement.

Le dispositif de transfert 2 comporte un corps d'axe longitudinal Y destiné à être orthogonal aux axes X10, X14, X16, X18.

Le corps comporte une enveloppe étanche 23 formée par des parois 26 aux extrémités longitudinales formées par des panneaux, et des flasques latéraux 27, 30 avant et arrière respectivement.

Les panneaux des parois 26 sont, par exemple soudés afin d'assurer une étanchéité aux extrémités longitudinales.

Les flasques latéraux 27, 30, dans l'exemple représenté comportent des panneaux amovibles pour permettre la maintenance du dispositif de transfert 2. L'étanchéité de montage des panneaux est obtenue par exemple au moyen de joints toriques (non représentés).

L'enveloppe 23 délimite une cavité 32 étanche dans laquelle est monté à coulissement un tiroir 34 le long de l'axe Y.

Le tiroir 34 n'est donc jamais en contact avec l'environnement extérieur.

Le tiroir 34 comporte trois compartiments C1, C2, C3 comprenant chacun un passage cylindrique 25, 27, 29 d'axe XC1, XC2, XC3 respectivement. Les axes XC1, XC2, XC3 sont parallèles entre eux et orthogonaux à l'axe Y.

De manière avantageuse, le dispositif de transfert comporte sur chacune de ses faces latérales 27, 30 des joints gonflables 35, 37 destinés à venir en contact avec la face d'extrémité longitudinale de l'emballage de transport 4.

Tout autre moyen apte à assurer une étanchéité entre le dispositif de transfert et l'emballage de transport et le dispositif d'entreposage pourrait convenir, par exemple des joints toriques ou des manchons souples.

Chaque joint 35, 37 a par exemple une forme circulaire de façon à border la périphérie de l'extrémité ouverte 10.1 de la cavité 10 et l'extrémité ouverte d'un logement 14, 16, 18. Ainsi les joints 35, 37 assurent un confinement continu.

Les flasques avant 27 et arrière 30 comportent respectivement une ouverture 31, 33 de diamètre permettant le passage des tapes 12, 24, 26, 28, les ouvertures 31, 33 sont alignés selon un axe orthogonal à l'axe Y.

Le compartiment C1 comporte des moyens 36 pour permettre le retrait de la tape d'obturation 12 de l'emballage de transport 4 et des moyens 38 pour permettre le retrait de la tape de transport 24, 26, 28 du logement 14, 16, 18.

Les moyens de retrait 36, 38 sont de réalisation semblable, seuls les moyens de retrait 36 seront décrits de manière détaillée.

Les moyens de retrait 36 comportent un vérin 40 mobile selon l'axe XC1 et muni de moyens 42 pour s'accrocher à la tape 12 de l'emballage de transport 4. Par exemple ces moyens d'accrochage 42 sont du type à baïonnette ou du type à pince. Par exemple une extrémité libre du vérin 40 comporte au moins un pion apte à venir coopérer avec un pion correspondant sur une face extérieure 12.1 de la tape 12 par rotation. Le vérin 40 se déplace dans le sens indiqué par la référence F1 pour venir accoster la tape 12.

Lorsque l'accrochage du vérin 40 sur la tape 12 est effectué, celui-ci coulisse dans la direction opposée selon la flèche F2, retirant la tape 12 de l'extrémité de la cavité 10 et libérant l'accès à la cavité 10.

Le vérin 40 est avantageusement un vérin pneumatique dont l'alimentation air comprimé est réalisée à partir d'une nacelle qui sera décrite plus tard. Un vérin déplacé électriquement pourrait également être envisagé.

Le diamètre intérieur du passage 25 est au moins égal au diamètre extérieur des tapes 12, 24, 26, 28 pour permettre l'entreposage des tapes 12, 24, 26, 28 dans le compartiment C1.

Les moyens de retrait 38 comportent de manière symétrique un vérin 43, monté tête-bêche par rapport au vérin 40 et fonctionnant de manière symétrique par rapport à un plan P orthogonal à l'axe XC1. Ainsi le vérin 43 se déplace dans le sens de la flèche F2 pour venir accoster la tape 24, 26, 28 et se déplace dans le sens F1 pour la retirer et permettre l'accès au logement 14, 16, 18.

De manière avantageuse, il est prévu une paroi 44 pour isoler les moyens de retrait 36 et les moyens de retrait 38 de manière à délimiter deux chambres 46, 48 séparées de manière étanche l'une de l'autre. Ainsi aucune contamination portée par la tape 12 ne peut être transférée aux tapes 14, 16, 18 et inversement.

Les retraits de la tape 12 et de l'une des tapes du dispositif d'entreposage peuvent être successifs ou simultanés.

Le compartiment C1 permet donc le retrait et le stockage des tapes de l'emballage de transport et du dispositif d'entreposage et leur entreposage.

Le compartiment C2 comporte des moyens de retrait 50 d'un bouchon 54, 56, 58 monté dans chaque logement 14, 16, 18 en arrière des tapes 24, 26, 28 afin de former une barrière biologique supplémentaire.

Les moyens de retrait 50 comportent également un vérin 52 mobile axialement le long de l'axe XC2 et apte à venir s'accrocher par une extrémité libre sur la face extérieure du bouchon 54, 56, 58.

L'accrochage peut être, par exemple du type à baïonnette ou du type à pince.

Le diamètre intérieur du passage 27 du compartiment C2 est sensiblement égal au diamètre extérieur du bouchon de protection biologique 54, 56, 58, pour permettre son logement dans le compartiment C2.

Le compartiment C2 permet donc le retrait du bouchon de protection biologique 54, 56, 58 du logement du dispositif d'entreposage et son entreposage.

On peut également prévoir des moyens similaires à ceux du compartiment C1 dans le cas où l'emballage de transport comporte un bouchon identique ou similaire à celui 54, 56, 58 du dispositif d'entreposage.

Le compartiment C3 comporte un passage cylindrique vide pour permettre le coulissement de l'étui de la cavité 10 du dispositif de transport vers le logement 14, 16, 18 du dispositif d'entreposage.

Le diamètre intérieur du passage 29 est sensiblement égal à celui de la cavité 10 et des logements 14, 16, 18 afin de réaliser un déplacement sans heurt de l'étui, ainsi lorsque l'axe X10 de la cavité 10, l'axe XC3 du compartiment C3 et l'axe X14 ou X16 ou X18 sont alignés, la cavité 10, le passage 29 et le logement 14, 16, 18 forment un canal ayant une paroi cylindrique sensiblement continue. Les risques de choc sont donc réduits.

Le tiroir 34 est avantageusement déplacé par un moteur électrique et un système à crémaillère. Un moteur pneumatique peut également être envisagé.

Grâce à la présente invention, une continuité de la barrière biologique est donc parfaitement assurée en formant un passage étanche pour le transfert de l'étui et en assurant le confinement des tapes et bouchons de protection biologique, tout transfert avec l'environnement extérieur étant évité.

Selon la présente invention, il est également prévu de vérifier l'étanchéité du contact entre les joints gonflables 35, 37 et l'emballage de transport et le dispositif d'entreposage respectivement par des moyens bien connus de l'homme du métier, du type à remontée de pression. On réalise le vide dans la zone délimitée par le joint gonflable censée être étanche et on vérifie la pression. En cas d'augmentation de celle-ci, le contact n'est pas étanche et une maintenance est requise.

Par ailleurs, il est prévu une vérification du montage étanche des flasques du corps lors du montage de ceux-ci.

Le dispositif de transfert selon la présente invention est, par exemple destiné à être monté sur une nacelle (non représentée) sur laquelle sera déposé l'emballage de transport 4 en contact du flasque avant 27 du dispositif de transfert, de manière à aligner l'axe X10 de la cavité 10 avec l'axe de l'ouverture 31 prévue dans le flasque avant 27.

Ainsi le dispositif de transfert 2 et l'emballage de transport 4 sont immobiles l'un par rapport à l'autre.

Avantageusement, des moyens de liaison amovibles (non représentés) entre l'emballage 4 et le dispositif de transfert 2 sont prévus pour éviter tout mouvement entre eux.

La nacelle peut, quant à elle, se déplacer horizontalement et verticalement afin d'aligner l'axe de l'ouverture pratiquée dans le flasque arrière du dispositif de transfert 2 avec un axe X14, X16, X18 d'un logement 14, 16, 18 respectivement du dispositif d'entreposage 6. Des moyens de liaison amovibles (non représentés) entre le dispositif d'entreposage et le dispositif de transfert sont également prévus, de manière avantageuse, pour éviter tout mouvement entre eux.

Nous allons maintenant expliquer le fonctionnement du dispositif de transfert selon la présente invention. A titre d'exemple non limitatif, nous considérons que l'on souhaite stocker l'étui dans le logement 14.

De manière avantageuse, le dispositif de transfert 2 est fixé sur le dispositif d'entreposage 6, durant les opérations de transfert de l'étui. Par ailleurs, il est supporté par la nacelle. Pour cela la nacelle est déplacée en direction du dispositif d'entreposage 6 jusqu'à ce que le flasque arrière 30 soit disposé parallèlement à la face avant du dispositif d'entreposage 6, de manière à ce que le joint gonflable 37 vienne en contact avec la face avant du dispositif d'entreposage 6. Avant le gonflage du joint 37, l'axe de l'ouverture arrière 33 est aligné avec celui du logement 14.

L'emballage de transport chargé d'un étui est disposé sur le plateau de la nacelle de manière à aligner l'axe X10 de la cavité 10 et l'axe de l'ouverture avant 31, des moyens de guidage peuvent être prévus à cet effet sur le plateau de la nacelle. L'emballage peut être disposé sur la nacelle avant que celle-ci n'accoste le dispositif d'entreposage.

La face d'extrémité de l'emballage de transport 4 est placé suffisamment près du flasque avant 27, pour que le joint gonflable 35 porté par le flasque avant 27 vienne en contact avec la face d'extrémité de l'emballage de transport 4 et forme une zone étanche autour de l'ouverture avant 31. Le gonflage du joint 35 est effectué après la mise en place de l'emballage de transport 4.

Le tiroir 34 est alors déplacé selon l'axe Y, de manière à aligner l'axe XC1 du compartiment C1 avec ceux des ouvertures avant 31 et arrière 33.

Les moyens de retrait 36, 38 des tapes sont successivement ou simultanément actionnés pour retirer les tapes 12 et 24 comme on peut le voir sur la figure 1.

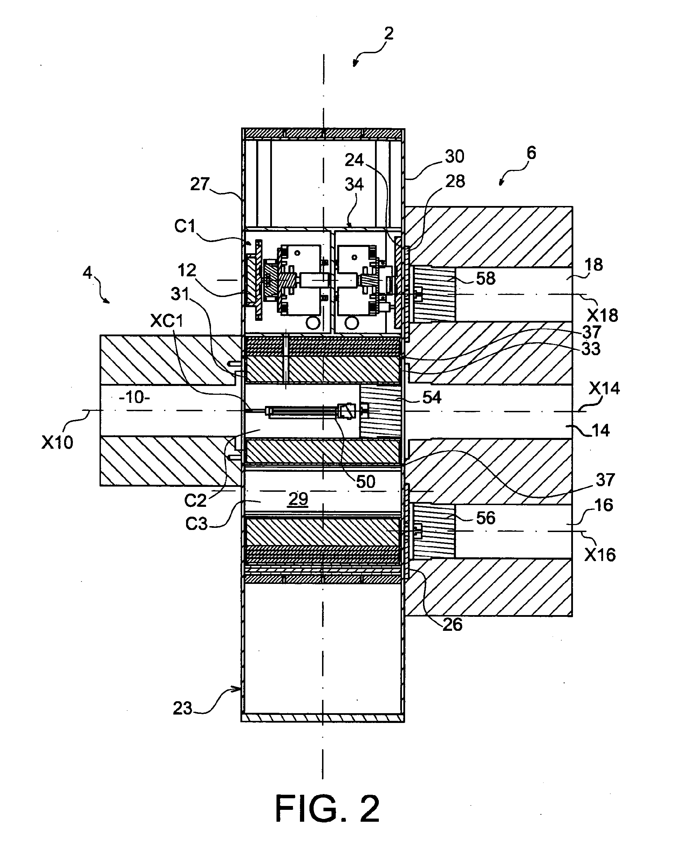

Ensuite le tiroir 34 est déplacé selon l'axe Y vers le haut jusqu'à ce que l'axe XC2 soit aligné avec les axes X14. Les moyens de retrait sont alors actionnés et le bouchon de protection biologique est retiré et stocké dans le passage 27, comme cela est représenté sur la figure 2.

Le tiroir 34 est encore déplacé vers le haut pour aligner l'axe XC3 avec les axes X10 et X14. L'étui est ensuite déplacé de la cavité 10 vers le logement 14 par coulissement, par exemple au moyen d'un vérin venant appliquer un effort de poussée sur l'étui. On pourrait envisager des moyens de traction traversant le logement 14 et le passage 29 et venant s'accrocher sur l'étui.

Lorsque l'étui est disposé dans le logement 14, les étapes de remise en place du bouchon de protection biologique puis des tapes sont réalisées de manière inverse à celles décrites ci-dessus.

Pour le chargement des autres logements 16, 18, le même mode opératoire est effectué.

Pour le retrait des étuis des logements 14, 16, 18 on opère de la même manière sauf que, lorsque le compartiment C3 est aligné avec la cavité 10 et le logement concerné, l'étui est transféré du logement du dispositif d'entreposage vers l'emballage de transport.

A l'issue de l'opération de transfert, le dispositif de transfert est désolidarisé du dispositif d'entreposage, la nacelle est alors libérée.

Des moyens de contrôle sont prévus à l'intérieur du dispositif de transfert, ceux-ci sont avantageusement visuels, par exemple du type caméra, pour vérifier la position des vérins et l'état de retrait des tapes et des bouchons de protection biologique.

La commande du tiroir 34 est réalisée par un opérateur qui ordonne le coulissement du tiroir 34 après avoir validé la fin de l'opération en cours.

De même, c'est l'opérateur qui gère le retrait des tapes et des bouchons, et le transfert de l'étui.

On pourrait également envisager un déroulement automatique des différentes étapes.

Dans le cas où le bouchon de protection biologique 54, 56, 58 n'est pas prévu ou est amovible de manière différente, un dispositif de transfert ne comportant que deux compartiments, le compartiment pour le retrait de la tape de l'emballage de transport et la tape du logement du dispositif d'entreposage, et le compartiment pour le transfert de l'étui ne sort pas du cadre de la présente invention.

Un dispositif de transfert dans lequel le retrait de la tape 12 et le retrait de la tape 24, 26, 28 s'effectuerait dans deux compartiments séparés ne sort également pas du cadre de la présente invention.

Un dispositif de transfert comportant plus de trois compartiments et/ou comportant des compartiments assurant d'autres fonctions ne sort également pas du cadre de la présente invention.

Le procédé de transfert d'un étui entre le dispositif d'entreposage et l'emballage de transport au moyen du dispositif de transfert selon la présente invention comporte les étapes :
- d'alignement de la cavité 10 et du logement 14 du dispositif d'entreposage à charger ou à décharger avec les ouvertures 31, 33 du dispositif de transfert,
- d'alignement du compartiment C1 avec la cavité 10 et le logement 14,
- de retrait des tapes 12, 24,
- d'alignement du compartiment C2 avec la cavité 10 et le logement 14, si le logement 14 comporte un bouchon 54,
- de retrait du bouchon 54, le cas échéant,
- d'alignement du compartiment C3 avec la cavité 10 et le logement 14 et de transfert de l'étui de la cavité 10 vers le logement 14 ou du logement 14 vers la cavité 10.

Il peut être prévu, après la première étape, d'immobiliser le dispositif de transfert sur le dispositif d'entreposage et sur l'emballage de transport.

Nous avons donc bien réalisé un dispositif permettant de transférer de manière sûre du combustible nucléaire contenu dans un étui entre un emballage de transport et un dispositif d'entreposage.

## Revendications

1. Dispositif de transfert (2) d'un étui de combustible nucléaire entre un emballage de transport (4) dudit étui et un dispositif d'entreposage (6) dudit étui, ledit emballage (4) comportant une cavité cylindrique(10)de réception de l'étui et une ouverture obturée par une tape de transport (12) pour le chargement/déchargement de l'étui, ledit dispositif d'entreposage (6) comportant au moins un logement (14, 16, 18) pour recevoir ledit étui et une ouverture obturée par une tape de stockage (24, 26, 28) pour le chargement/déchargement dudit étui, lequel dispositif de transfert comportant un corps et un tiroir (34) d'axe longitudinal, apte à coulisser dans ledit corps selon son axe longitudinal (Y), ledit tiroir (34) comportant au moins un premier compartiment (C1) pour retirer la tape de transport (12) et la tape de stockage (24, 26, 28) et un deuxième compartiment (C3) pour permettre le passage de l'étui de l'emballage de transport (4) au dispositif d'entreposage (6) et inversement, et des moyens (35, 37) pour rendre étanche le transfert entre l'emballage de transport (4) et le dispositif de transfert (2) et entre le dispositif de transfert (2) et le dispositif d'entreposage (6).

2. Dispositif selon la revendication 1, comportant également un compartiment intermédiaire (C2) entre le premier (C1) et le deuxième (C3) compartiment, comportant un passage dans lequel sont montés des moyens de retrait (50) d'un bouchon de protection biologique (54, 56, 58) contenu dans le dispositif d'entreposage (6) en arrière de la tape (24, 26, 28), ledit bouchon (54, 56, 58) étant stocké dans ledit passage.

3. Dispositif selon la revendication 1 ou 2, dans lequel le premier compartiment (C1) comporte un passage axial dans lequel sont montés des premiers moyens de retrait (36) de la tape de transport (12) et des deuxièmes moyens de retrait (38) de la tape de stockage (34, 36, 38), lesdits moyens de retrait (36, 38) étant du type à baïonnette ou à pince montés à coulissement dans ledit passage, lesdites tapes (12, 24, 26, 28) étant stockées dans ledit passage lors du retrait.

4. Dispositif selon la revendication précédente, dans lequel les premiers moyens de retrait (36) et les deuxièmes moyens de retrait (38) sont montés tête-bêche, et sont montés dans deux chambres (46, 48) isolées l'une de l'autre.

5. Dispositif selon l'une des revendications 1 à 4, dans lequel le deuxième compartiment (C3) comporte un passage de diamètre supérieur à celui d'un étui pour permettre le transfert d'un étui entre l'emballage de transport (4) et le dispositif d'entreposage (6) par ledit passage, ledit diamètre étant sensiblement égal à celui de la cavité (10) de l'emballage de transport (4) et à celui du logement (14, 16, 18) du dispositif d'entreposage (6).

6. Dispositif selon l'une quelconque des revendications 1 à 5, dans lequel le corps comporte une enveloppe (23) définissant un espace intérieur étanche dans lequel le tiroir (34) peut coulisser, ladite enveloppe (23) comportant des flasques latéraux (27, 30) munis chacun d'une ouverture (31) destinée à être en regard de la cavité (10) de l'emballage de transport (4) et une ouverture (33) destinée à être en regard du logement (14, 16, 18) du dispositif d'entreposage (6), et lesdits moyens (35, 37) pour rendre étanche le transfert comportant un premier (35) et un deuxième (37) joint gonflable solidaires des flasques latéraux (27, 30) entourant de manière continue chacune des ouvertures (31, 33), et destinés à venir chacun en contact avec une face d'extrémité de l'emballage de transport (4) et avec une face d'extrémité du dispositif d'entreposage (6) respectivement.

7. Dispositif selon la revendication précédente, dans lequel les flasques latéraux (27, 30) comportent des panneaux amovibles (27.1, 30.1) permettant la maintenance, lesdits panneaux (27.1, 30.1) étant montés de manière étanche afin d'assurer l'étanchéité de l'enveloppe.

8. Dispositif selon l'une quelconque des revendications 1 à 7, dans lequel le tiroir (34) est déplacé au moyen d'un moteur électrique.

9. Dispositif selon
revendication 3, dans lequel les moyens de retrait (36, 38, 50) sont actionnés par air comprimé.

10. Procédé de transfert d'un étui de combustible nucléaire entre un emballage de transport et un dispositif d'entreposage au moyen d'un dispositif de transfert comportant un tiroir muni d'au moins un premier compartiment pour le retrait de tapes de l'emballage de transport et du dispositif d'entreposage, d'un deuxième compartiment pour le passage de l'étui et des moyens d'étanchéité entre le dispositif de transfert et l'emballage de transport et le dispositif d'entreposage, ledit procédé comportant les étapes :
a) d'alignement du dispositif de transfert avec l'emballage de transport et le dispositif d'entreposage,
b) d'alignement du premier compartiment du tiroir avec la cavité de l'emballage de transport et un logement du dispositif d'entreposage par déplacement du tiroir,
c) de retrait de la tape de transport et de la tape de stockage,
d) d'alignement du deuxième compartiment avec la cavité de l'emballage de transport et ledit logement du dispositif d'entreposage par déplacement du tiroir,
e) de coulissement de l'étui entre le dispositif d'entreposage et l'emballage de transport.

11. Procédé de transfert selon la revendication 10, comportant une étape c') d'alignement d'un compartiment intermédiaire avec la cavité de l'emballage de transport et ledit logement du dispositif d'entreposage par déplacement du tiroir, et une étape c") de retrait d'un bouchon contenu dans ledit logement en retrait de la tape de stockage.

12. Procédé de transfert selon la revendication 10 ou 11, comportant après l'étape a) l'étape de gonflage de joints portés par le dispositif et en contact avec l'emballage de transport et le dispositif d'entreposage pour assurer un contact étanche entre le dispositif de transfert et l'emballage de transport et le dispositif d'entreposage,

13. Procédé de transfert selon l'une des revendications 10 à 12, dans lequel lors de l'étape a), il est prévu un accrochage du dispositif de transfert sur le dispositif d'entreposage et sur l'emballage de transport.

## Claims

1. Device (2) for transferring a nuclear fuel canister between a container (4) for transporting said canister and a device (6) for storing said canister, said container (4) comprising a cylindrical cavity (10) for receiving the canister and an opening sealed by a transport plug (12) for the loading/unloading of the canister, said storage device (6) comprising at least one housing (14, 16, 18) to receive said canister and an opening sealed by a storage plug (24, 26, 28) for the loading/unloading of said canister, said transfer device comprising a body and a slide (34) of longitudinal axis, capable of sliding in said body along its longitudinal axis (Y), said slide (34) comprising at least one first compartment (C1) to withdraw the transport plug (12) and the storage plug (24, 26, 28) and a second compartment (C3) for allowing the canister to pass from the transport container (4) to the storage device (6) and conversely, and means (35, 37) for sealing the transfer between the transport container (4) and the transfer device (2) and between the transfer device (2) and the storage device (6).

2. Device according to claim 1, also comprising an intermediate compartment (C2) between the first (C1) and the second (C3) compartment, comprising a passage in which are assembled means of withdrawing (50) a biological protection cap (54, 56, 58) contained in the storage device (6) behind the plug (24, 26, 28), said cap (54, 56, 58) being stored in said passage.

3. Device according to claim 1 or 2, wherein the first compartment (C1) comprises an axial passage in which are assembled first means of withdrawing (36) the transport plug (12) and second means of withdrawing (38) the storage plug (34, 36, 38), said withdrawal means (36, 38) being of the bayonet or clamp type assembled in a sliding manner in said passage, said plugs (12, 24, 26, 28) being stored in said passage during the withdrawal.

4. Device according to the preceding claim, wherein the first withdrawal means (36) and the second withdrawal means (38) are assembled head to tail, and are assembled in two chambers (46, 48) isolated from each other.

5. Device according to one of claims 1 to 4, wherein the second compartment (C3) comprises a passage of diameter greater than that of a canister to enable the transfer of a canister between the transport container (4) and the storage device (6) via said passage, said diameter being substantially equal to that of the cavity (10) of the transport container (4) and to that of the housing (14, 16, 18) of the storage device (6).

6. Device according to any of claims 1 to 5, wherein the body comprises a jacket (23) defining a sealed interior space in which the slide (34) can slide, said jacket (23) comprising lateral end-plates (27, 30) each provided with an opening (31) intended to be facing the cavity (10) of the transport container (4) and an opening (33) intended to be facing the housing (14, 16, 18) of the storage device (6), and said means (35, 37) for sealing the transfer comprising a first (35) and a second (37) inflatable seal integral with the lateral end-plates (27, 30) surrounding in a continuous manner each of the openings (31, 33), and each intended to come into contact with one end face of the transport container (4) and with one end face of the storage device (6) respectively.

7. Device according to the preceding claim, wherein the lateral end-plates (27, 30) comprise removable panels (27.1, 30.1) enabling maintenance, said panels (27.1, 30.1) being assembled in a sealed manner in order to assure the sealing of the jacket.

8. Device according to any of claims 1 to 7, wherein the slide (34) is moved by means of an electric motor.

9. Device according to any of claims 1 to 8 in combination with claim 3, wherein the withdrawal means (36, 38, 50) are operated by compressed air.

10. Method of transferring a nuclear fuel canister between a transport container and a storage device by means of a transfer device comprising a slide provided with at least one first compartment for the withdrawal of plugs from the transport container and the storage device, a second compartment for allowing
the canister and sealing means to pass between the transfer device and the transport container and the storage device, said method comprising the steps of:
a) alignment of the transfer device with the transport container and the storage device,
b) alignment of the first compartment of the slide with the cavity of the transport container and a housing of the storage device by moving the slide,
c) removal of the transport plug and the storage plug,
d) alignment of the second compartment with the cavity of the transport container and said housing of the storage device by moving the slide,
e) sliding the canister between the storage device and the transport container.

11. Method of transfer according to claim 10, comprising a step c') of alignment of an intermediate compartment with the cavity of the transport container and said housing of the storage device by moving the slide, and a step c'') of withdrawing a cap contained in said housing set back from the storage plug.

12. Method of transfer according to claim 10 or 11, comprising after step a) the step of inflating seals borne by the device and in contact with the transport container and the storage device to assure a sealed contact between the transfer device and the transport container and the storage device.

13. Method of transfer according to one of claims 10 to 12, wherein during step a), an attachment of the transfer device to the storage device and to the transport container is provided for.

## Patentansprüche

1. Vorrichtung (2) zur Übergabe einer Kernbrennstoffhülle zwischen einer Transportverpackung (4) dieser Hülle und einer Einlagerungsvorrichtung (6) dieser Hülle, wobei die Verpackung (4) einen zylindrischen Hohlraum (10) zur Aufnahme der Hülle und eine Öffnung zum Laden/Entladen der Hülle umfasst, die durch einen Transportverschluss (12) verschlossen ist, wobei die Einlagerungsvorrichtung (6) mindestens eine Aufnahme (14, 16, 18) zur Aufnahme der Hülle und eine Öffnung zum Laden/Entladen der Hülle umfasst, wobei die Öffnung mit einem Lagerverschluss (24, 26, 28) verschlossen ist, wobei diese Übergabevorrichtung (6) einen Körper und einen Schieber (34) mit einer Längsachse aufweist, der geeignet ist, sich entlang seiner Längsachse (Y) im Körper zu verschieben, wobei dieser Schieber (34) mindestens eine erste Abteilung (C1) umfasst, um den Transportverschluss (12) und den Lagerverschluss (24, 26, 28) herauszuziehen, und eine zweite Abteilung (C3), um den Durchgang der Hülle von der Transportverpackung (4) zur Einlagerungsvorrichtung (6) und umgekehrt zu erlauben, und Dichtungsmittel (35, 37), um die Übergabe zwischen der Transportverpackung (4) und der Übergabevorrichtung (2) und zwischen der Übergabevorrichtung (2) und der Einlagerungsvorrichfiung (6) abzudichten.

2. Vorrichtung nach Anspruch 1, außerdem umfassend eine Zwischenabteilung (C2) zwischen der ersten (C1) und der zweiten (C3) Abteilung, umfassend einen Durchgang, in welchem Mittel (50) zum Herausziehen einer biologischen Schutzkappe (54, 56, 58) eingebaut sind, die hinter dem Verschluss (24, 26, 28) in der Einlagerungsvorrichtung (6) enthalten ist, wobei diese Kappe (54, 56, 58) in diesem Durchgang gelagert wird.

3. Vorrichtung nach Anspruch 1 oder 2, wobei die erste Abteilung (C1) einen axialen Durchgang aufweist, in welchem erste Mittel (36) zum Ausziehen des Transportverschlusses (12) und zweite Mittel (38) zum Ausziehen des Lagerverschlusses (34, 36, 38) eingebaut sind, wobei diese Ausziehmittel (36, 38) vom Typ mit Bajonett oder mit Greifer sind und in diesem Durchgang hin und her beweglich eingebaut sind, wobei
die Verschlüsse (12, 24, 26, 28) beim Herausziehen in diesem Durchgang gelagert werden.

4. Vorrichtung nach dem vorherigen Anspruch, wobei die ersten Ausziehmittel (36) und die zweiten Ausziehmittel (38) entgegengesetzt tiegeln und in zwei Kammern (46, 48) eingebaut sind, die voneinander isoliert sind.

5. Vorrichtung nach einem der Ansprüche 1 bis 4, wobei die zweite Abteilung (C3) einen Durchgang aufweist, dessen Durchmesser größer ist als der der Hülle, um die Übergabe einer Hülle zwischen der Transportverpackung (4) und der Einlagerungsvorrichtung (6) durch diesen Durchgang zu erlauben, wobei dieser Durchmesser im Wesentlichen dem des Hohlraums (10) der Transportverpackung (4) und dem der Aufnahme (14, 16, 18) der Einlagerungsvorrichtung (6) entspricht.

6. Vorrichtung nach einem der Ansprüche 1 bis 5, wobei der Körper ein Gehäuse (23) umfasst, das einen dichten Innenraum definiert, in welchem der Schieber (34) sich verschieben kann, wobei dieses Gehäuse (23) Seitenwände (27, 30) aufweist, die jeweils mit einer Öffnung (31) versehen sind, die dazu bestimmt ist, dem Hohlraum (10) der Transportverpackung (4) gegenüberzuliegen, und mit einer Öffnung (33), die dazu bestimmt ist, der Aufnahme (14, 16, 18) der Einlagerungsvorrichtung (6) gegenüberzuliegen, und die Mittel (35, 37) zur Abdichtung der Übergabe eine erste (35) und eine zweite (37) aufblasbare Dichtung umfassen, die mit den Seitenwänden (27, 30) fest verbunden sind, jede der Öffnungen (31, 33) auf durchgehende Weise umgeben und dazu bestimmt sind, jeweils mit einer Endseite der Transportverpackung (4) und mit einer Endseite der Einlagerungvorrichtung (6) in Kontakt zu kommen.

7. Vorrichtung nach dem vorherigen Anspruch, wobei die Seitenwände (27, 30) abnehmbare Platten (27.1, 30.1) aufweisen, die die Wartung erlauben, wobei diese Platten (27.1, 30.1), wobei diese Platten (27.1, 30.1) auf dichte Weise montiert sind, um die Dichtigkeit des Gehäuses zu gewährleisten.

8. Vorrichtung nach einem der Ansprüche 1 bis 7, wobei der Schieber (34) mithilfe eines Elektromotors verschoben wird.

9. Vorrichtung nach Anspruch 3, wobei die Ausziehmittel (36, 38, 50) durch Druckluft betätigt werden.

10. Verfahren zur Übergabe einer Kernbrennstoffhülle zwischen einer Transportverpackung und einer Einlagerungsvorrichtung mithilfe einer Übergabevorrichtung, umfassend einen Schieber, der mindestens mit einer ersten Abteilung zum Herausziehen der Verschlüsse der Transportverpackung und der Einlagerungsvorrichtung, einer zweiten Abteilung für den Durchgang der Hülle und Dichtungsmittein zwischen der Übergabevorrichtung und der Transportverpackung und der Einlagerungsvorrichtung versehen ist, wobei das Verfahren die folgenden Schritte umfasst:
a) das Ausrichten der Übergabevorrichtung mit der Transportverpackung und der Einlagerurgsvarrichtung,
b) das Ausrichten der ersten Abteilung des Schiebers mit dem Hohlraum der Transportverpackung und einer Aufnahme der Einlagerungsvorrichtung durch Bewegen des Schiebers,
c) das Herausziehen des Transportverschlusses und des Lagerverschlusses,
d) das Ausrichten der zweiten Abteilung mit dem Hohlraum der Transportverpackung und der Aufnahme der Einlagerungsvorrichtung durch Bewegen des Schiebers,
e) das Verschieben der Hülle zwischen der Einlagerungsvorrichtung und der Transportverpackung.

11. Übergabeverfahren nach Anspruch 10, umfassend einen Schritt c') des Ausrichtens einer Zwischenabteilung mit dem Hohlraum der Transportverpackung und der Aufnahme der Einlagerungsvorrichtung durch Bewegen des Schiebers, und einen Schritt c") des Herausziehens einer Kappe, die hinter dem Lagerverschluss in der Aufnahme enthalten ist.

12. Übergabeverfahren nach Anspruch 10 oder 11, umfassend, nach Schritt a), den Schritt des Aufblasens der Dichtungen, die von der Vorrichtung getragen werden und mit der Transportverpackung und der Einlagerungsvorrichtung in Kontakt sind, um einen dichten Kontakt zwischen der Übergabevorrichtung und der Transportverpackung und der Einlagerungsvorrichtung zu gewährleisten.

13. Übergabeverfahren nach einem der Ansprüche 10 bis 12, wobei in Schritt a) eine Kopplung der Übergabevorrichtung an die Einlagerungsvorrichtung und an die Transportverpackung vorgesehen ist.
